# EUROPEAN PATENT SPECIFICATION

(11) **EP 0 537 375 B1**
(45) Date of publication and mention of the grant of the patent: **04.01.1995**
(21) Application number: 91117592.5
(22) Date of filing: 15.10.1991
(51) Int. Cl.: C01B 33/148

(54) **Method of preparing high-purity aqueous silica sol**
Verfahren zur Herstellung von wässrigen Kieselsäuresole von hoher Reinheit
Procédé de préparation d'un sol aqueux de silice de haute pureté

(43) Date of publication of application: 21.04.1993
(73) Proprietor: NISSAN CHEMICAL INDUSTRIES LTD., Chiyoda-ku Tokyo (JP)
(72) Inventor: Watanabe, Yoshitane, c/o Nissan Chem. Ind. Ltd., Funabashi-shi, Chiba-ken (JP); Suzuki, Hiromi, c/o Nissan Chem. Ind. Ltd., Sodegaura-shi, Chiba-ken (JP); Ando, Mikio, c/o Nissan Chem. Ind. Ltd., Sodegaura-shi, Chiba-ken (JP)
(74) Representative: Hansen, Bernd, Dr. Dipl.-Chem.

(56) References cited:
- GB-A- 1 148 950
- US-A- 4 054 536
- CHEMICAL ABSTRACTS, vol. 110, no. 22, 29 May 1989, Columbus, Ohio, US; abstract no. 195757X, page 166 ; & JP-A-63285112 (NISSAN CHEMICAL IND, LTD) 22-11-1988
- CHEMICAL ABSTRACTS, vol. 105, no. 20, 17 November 1986, Columbus, Ohio, US; abstract no. 175242U, page 158 ; & JP-A-61158810 (CATALYSTS AND CHEMICALS INDUSTRIES CO., LTD) 18-07-1986

## Description

The present invention relates to improvement of a method of preparing a high-purity stable aqueous silica sol which has an SiO₂ concentration of from 30 to 50 % by weight and which is substantially free from any other polyvalent metal oxides than silica and in which the colloidal silica has a mean particle size of falling within the range of from 10 to 30 nm.

In particular, the silica sol to be obtained by the method of the present invention has an extremely low content of oxides of polyvalent metals such as iron or alminum and is therefore employed for the use which desires the absence of such metals in the silica sol, for example, as an abrasive for semiconductors.

### DESCRIPTION OF THE PRIOR ART

A stable aqueous silica sol of industrial products which are used in various uses is prepared from water-soluble alkali metal silicates, in particular, from water glass of industrial products which are inexpensive and are easily available.

However, the stable aqueous silica sol to be prepared from water glass often has some problems because of the metal oxides which are generally in the silica sol in a slight amount, especially polyvalent metal oxides therein, in some uses, for example as an abrasive for polishing the surfaces of semiconductors, as a raw material for preparing quartz fibers or in any other uses which require a high-purity sol, since the techniques in the field has been high-leveled in these days.

A method of preparing an aqueous silica sol which is substantially free from alkali metal oxides has already been known. For example, U.S. Patent 4,054,536 illustrates a method of preparing an aqueous silica sol which is substantially free from alkali metal oxides, wherein an aqueous sol having pH of from 8 to 10 and SiO₂ content of from 5 to 55 %, which is obtained by adding an aqueous silicic acid solution with a concentration of from 2 to 10 % to a hot aqueous solution of an alkanolamine in a proportion of from 1 to 100 as the molar ratio of SiO₂ to the amine with removing water by distillation, is passed through ion-exchange resins to thereby form an aqueous silica sol having an alkali metal content of 200 ppm or less and having pH of from 2 to 5, and thereafter ammonia is added to the resulting sol so as to make it to have pH of from 9 to 10 whereby a silica sol having an alkali metal content of 200 ppm or less is obtained.

Japanese Patent Application Laid-Open No. 61-158810 has proposed a method of obtaining a silica sol having a low content of any other polyvalent metal oxides than silica, wherein a silicic acid solution which is obtained by bringing an aqueous solution of an alkali silicate having a concentration of from 0.5 to 7 % by weight into contact with a strong acid type cation-exchange resin for alkali-removal is treated with an acid at pH of 2.5 or less and at a temperature of from 0 to 98°C, then the impurities in the thus treated solution are removed by filtration through an ultrafilter, then the resulting solution is passed through a mixed bed composed of cation-exchange and anion-exchange resins and through a chelate resin layer, then ammonia or an amine is added to a part of the resulting oligo-silicic acid solution to give a heel solution having pH of from 7 to 10, and then the remaining part of the oligo-silicic acid solution is gradually and dropwise added to the heel solution at a temperature of 60 to 98°C so as to grow the particles of the colloidal silica in the sol.

Japanese Patent Application Laid-Open No. 63-285112 has proposed a method of preparing a stable aqueous silica sol which has an SiO₂ concentration of about 40 % by weight and which is substantially free from any other polyvalent metal oxides than silica and in which the colloidal silica has a uniform particle size distribution of falling within the range of from 30 to 100 nm; the method being characterized in that an aqueous solution of an active silicic acid having a pH value of from 0 to 2 as adjusted with an acid and having an SiO₂ concentration of from 2 to 6 % by weight is treated with a mixed cation-exchange and anion-exchange resin, an alkali metal hydroxide is added to the resulting aqueous active silicic acid solution to form a stabilized aqueous active silicic acid solution having a molar ratio of SiO₂/M₂O of being from 100 to 300 (where M means an alkali metal atom), the thus stabilized solution is then gradually added to an aqueous solution of an alkali metal hydroxide or alkali metal silicate at a temperature of from 90 to 150°C until the molar ratio of SiO₂/M₂O in the resulting solution is to be from 20 to 60, then the solution is continuously heated further at the same temperature, an acid is added to the silica sol thus formed so that from 40 to 90 % of the alkali content in the sol is neutralized, then the sol is continuously heated further at the same temperature, and the aqueous silica sol thus formed is concentrated through a micro porous membrane.

Where an aqueous silica sol is prepared by the method described in U.S. Patent 4,054,536, using an aqueous solution of an active silicic acid to be obtained by passing a diluted aqueous solution of water glass of a commercial product, as a starting material through a cation-exchange resin layer, an aqueous silica sol having an alkali metal content to silica of 200 ppm or less can be obtained. However, the aqueous silica sol to be obtained by the method is one having a content of other metals, for example, polyvalent metals such as iron or aluminun, to silica of being 300 ppm or more. The polyvalent metals which are in the aqueous silica sol in such a high content are derived from polyvalent metal oxides which are contained in the water glass of the starting material in a content of about 300 ppm or more.

In accordance with the other method as described in Japanese Patent Laid-Open Application No. 61-158810, all the alkali metals and other polyvalent metals than silicon which are in the alkali metal silicate of the starting material such as water glass are removed before preparing the silica sol. However, the removing step is not efficient as the process of industrial production of silica sol, since supplement of a separately prepared acid solution to the active silicic acid-containing aqueous solution is necessary in an amount corresponding to 20 to 10,000 times of the said aqueous solution in the step of removing the impurities from the aqueous active silicic acid solution containing the acid as previously added thereto by passing the aqueous solution through the ultrafilter. Additionally, in accordance with the method described in Japanese Patent Laid-Open Application No. 61-158810, a long period of 760 hours is necessary for the growth of the colloidal silica particles, and concentration of the resulting silica sol is effected after the completion of the growth of the particles. Therefore, such step of growing the silica particles to be followed by concentration of the resulting silica sol is not also efficient as the process of industrial production of silica sol.

In accordance with the method described in the above-mentioned Japanese Patent Application Laid-Open No. 63-285112, it is difficult to prepare a stable aqueous silica sol of a colloidal silica smaller than 30 millimicrons. Where a silica sol is employed as a binder, the sol may have a higher binding power when the particle size of the colloidal silica in the sol is smaller. On the contrary, however, the sol would be less stable when the particle size of the colloidal silica of the sol is smaller. Accordingly, in order to compensate the latter drawback, the SiO₂ concentration in the sol is to be lowered. In general, however, when the sol is used as a binder, it is desired to have a high SiO₂ concentration and a sufficient binding power.

Under the situation, it is one technical theme in this field to provide a silica sol as so improved that it may be helpful for enhancing the quality of the products to be obtained by the use of the silica sol, as inexpensive industrial products. The present invention is therefore to satisfy the theme and to overcome the problems in the above-mentioned conventional methods of producing a silica sol having a low content of other polyvalent metal oxides than silica therein. Specifically, the present invention is to provide a method of efficiently producing a stable aqueous silica sol, which has a content of other polyvalent metal oxides than silica of being less than 300 ppm and has an SiO₂ concentration of from 30 to 50 % by weight and in which the colloidal silica has a mean particle size within the range of from 10 to 30 nm, from an alkali metal silicate containing polyvalent metal oxides as impurities.

### SUMMARY OF THE INVENTION

The method of the present invention of producing a stable aqueous silica sol which has an SiO₂ concentration of from 30 to 50 % by weight and is substantially free from any other polyvalent metal oxides than silica and in which the colloidal silica has a mean particle size of from 10 to 30 nm is characterized by comprising the following steps (a), (b), (c), (d), (e), (f), (g) and (h):
(a) a step where an aqueous solution of a water-soluble alkali metal silicate as dissolved therein in a concentration of from 1 to 6 % by weight as the SiO₂ content to be derived from the silicate, the said silicate containing other polyvalent metal oxides than silica in a proportion to silica of from 300 to 10000 ppm, is brought into contact with a hydrogen-type strong-acid cation-exchange resin so as to form an aqueous solution of an active silicic acid having an SiO₂ concentration of from 1 to 6 % by weight and a pH value of from 2 to 4, and the solution thus formed is recovered;
(b) a step where a strong acid is added to the aqueous solution of active silicic acid as recovered in the step (a) so that the said aqueous solution is adjusted to have a pH value of from 0 to 2.0 and then the resulting aqueous solution is kept at a temperature between 0°C and 100°C for a period of from 0.1 to 120 hours;
(c) a step where the aqueous solution as obtained in the step (b) is brought into contact with a hydrogen-type strong-acid cation-exchange resin, the solution which resulted from the contact is then brought into contact with a hydroxyl-type strong-basic anion-exchange resin to form an aqueous solution of an active silicic acid which does not substantially contain any other soluble substances than an active silicic acid and which has an SiO₂ concentration of from 1 to 6 % by weight and a pH value of from 2 to 5, and the solution thus formed is recovered;
(d) a step where the aqueous solution of the active silicic acid recovered in the step (c) is fed over a period of time of 1 to 20 hours into an aqueous solution of an alkali metal silicate having an SiO₂ concentration of from 0.1 to 8 % by weight and a molar ratio of 1 to 4.5 as SiO₂/M₂O, wherein M represents an alkali metal atom, or into an aqueous solution of an alkali metal hydroxide having a concentration of from 0.1 to 5% by weight of said hydroxide until a molar ratio of 30 to 300 as SiO₂/M₂O of the resulted liquid by the feeding is obtained while said resulted liquid by the feeding is maintained at a temperature of from 60 to 150°C under stirring throughout the feeding, said aqueous solution of an alkali metal silicate being formed by mixing an aqueous solution of an alkali metal hydroxide with an aqueous solution of the active silicic acid recovered in the same step as step (c) or by diluting or concentrating the resulted mixture;
(e) a step where the liquid resulted from the step (d) is successively kept at a temperature of from 60 to 150°C for a period of from 0.1 to 10 hours with stirring, after completion of the previous step (d), so as to form a stable aqueous sol of a colloidal silica having a mean particle size of from 10 to 30 nm;
(f) a step where the water in the formed sol in the step (e) is removed through a micro porous membrane from said sol until a stable aqueous sol of colloidal silica having an SiO₂ concentration of from 30 to 50 % by weight is formed;
(g) a step where the stable aqueous silica sol as obtained in the step (f) is brought into contact with a hydrogen-type strong-acid cation-exchange resin, and thereafter the aqueous silica sol as formed by the contact is brought into contact with a hydroxyl-type strong-basic anion-exchange resin to thereby form an acidic aqueous silica sol which is substantially free from any other polyvalent metal oxides than silica; and
(h) a step where ammonia is added to the acidic aqueous sol as formed in the step (g) in order that the sol may have a pH value of from 8 to 10.5 to thereby form a stable aqueous silica sol which has an SiO₂ concentration of from 30 to 50 % by weight and is substantially free from any other polyvalent metal oxides than silica and in which the colloidal silica has a mean particle size of from 10 to 30 nm.

### DETAILED DESCRIPTION OF THE INVENTION

The alkali metal silicate to be employed in the step (a) of the manufacture method of the present invention may be anyone which is available as commercial industrial products, but a water-soluble one is preferred which has a molar ratio of silicon to alkali metals as contained therein of being approximately from 0.5 to 4.5 as SiO₂/M₂O (where M means an alkali metal). In particular, for the purpose of producing the silica sol of the invention as inexpensive industrial products in a large-scaled industrial plant, sodium water glass is preferably employed which is a low-priced industrial product and which has a molar ratio of SiO₂/M₂O of being approximately from 2 to 4. However, the commercial product of water glass for industrial use generally contains some other polyvalent metal oxides than silica as impurities in an amount of approximately from 300 to 10000 ppm to the SiO₂ content in the water glass. Main polyvalent metals which are contained in the water glass in a relatively high content are, for example, aluminum, iron, calcium and magnesium.

In the step (a) is used an aqueous solution of an alkali metal silicate, which is obtained by dissolving such an alkali metal silicate containing the said polyvalent metal oxides than silica as impurities in water in a concentration of from 1 to 6 % by weight, preferably from 2 to 6 % by weight, as the SiO₂ content to be derived from the said silicate. As the water can be employed an industrial water which has been treated for removing cations therefrom.

The hydrogen-type strong-acid cation-exchange resin to be employed in the step (a) may be anyone which has heretofore been utilized in this technical field for removing alkali metal ions from a water glass-containing aqueous solution, and such is easily available as a commercial product for industrial use. One example of the resin is Amberlite IR-120B (trade name).

In the step (a) of the present invention, the above-mentioned alkali metal silicate-containing aqueous solution is brought into contact with the above-mentioned hydrogen-type strong-acid cation-exchange resin. The contact is preferably conducted by passing the aqueous solution through a column filled with the ion-exchange resin at 0 to 60°C, preferably at 5 to 50°C; and the solution as passed through the column is recovered as an active silicic acid-containing aqueous solution which has an SiO₂ concentration of from 1 to 6 % by weight and a pH value of from 2 to 4. The amount of the hydrogen-type strong-acid cation-exchange resin to be employed in the step is such that is sufficient for exchanging all the alkali metal ions in the alkali metal silicate-containing aqueous solution by hydrogen ions. The speed of solution which is passed through the column is preferably approximately from 1 to 10 per hour as the space velocity.

As examples of the strong acid to be employed in the step (b), there are mentioned inorganic acids such as hydrochloric acid, nitric acid and sulfuric acid. Above all, nitric acid is most preferred for the purpose of elevating the percentage of elimination of the aluminum content and the iron content. The strong acid is added to the active silicic acid-containing aqueous solution as recovered in the step (b) before the solution is deteriorated after recovery and is preferably added thereto immediately after recovery thereof. The amount of the strong acid to be added is such that may make the pH value of the resulting solution within the range of from 0 to 2, preferably from 0.5 to 1.8. After the addition, the solution is then maintained at a temperature between 0°C and 100°C for a period of from 0.1 to 120 hours, in the step (b).

The hydrogen-type strong-acid cation-exchange resin to be employed in the step (c) may be the same as that employed in the previous step (a). The hydroxyl-type strong-basic anion-exchange resin to be employed in the step (c) may be anyone which has heretofore been utilized for removing anions from ordinary silica sol, and such is easily available as a commercial product. One example of the anion-exchange resin is Amberlite IRA-410 (trade name).

In the step (C), the aqueous solution as obtained in the step (b) is first brought into contact with the above-mentioned hydrogen-type strong-acid cation-exchange resin. The contact is preferably effected by passing the aqueous solution through a column filled with the above-mentioned hydrogen-type strong-acid cation-exchange resin at 0 to 60°C, preferably 5 to 50°C at a space velocity of from 2 to 20 per hour. Next, the aqueous solution as obtained by the passing is, preferably immediately after obtaining the same, then brought into contact with the above-mentioned hydroxyl-type strong-basic anion-exchange resin at a temperature of from 0 to 60°C, preferably from 5 to 50°C and at a space velocity of from 1 to 10 per hour. After the passing, the resulting aqueous solution is recovered, and the recovered solution is then applied to the next step (d). It is desired that the solution is applied to the step (d) within 6 hours after preparation.

As the alkali metal hydroxide to be used in the step (d), sodium hydroxide or potassium hydroxide are preferred. The aqueous solution of the hydroxide is preferably one as obtained by dissolving a commercial product of sodium hydroxide or potassium hydroxide preferably having a purity of 95 % or more in an industrial water from which cations have been removed, preferably in a concentration of from 2 to 20 % by weight. An aqueous solution of an alkali metal hydroxide having a concentration of from 0.1 to 5 % by weight is also preferably prepared from the above-mentioned sodium or potassium hydroxide or a solution thereof. The aqueous alkali metal silicate solution to be used in the step (d) is prepared as a solution having a molar ratio of SiO₂/M₂O of being from 1 to 4.5 and an SiO₂ concentration of from 0.1 to 8 % by weight, by adding the above-mentioned aqueous alkali metal hydroxide solution preferably having a concentration of from 2 to 20 % by weight to the aqueous active silicic acid solution as obtained in the step (c), or by diluting or concentrating the resulting mixture.

The apparatus to be used in carrying out the step (d) may be any conventional acid-resistant and alkali-resistant pressure container which is equipped with a stirrer, a temperature controller and a liquid feeding means.

In the step (d), a feeding liquid is fed to the liquid which has been filled previously into the device with stirring over a period of from 1 to 20 hours, while the mixture liquid obtained by the feeding is kept at a temperature of from 60 to 150°C with evaporation of water therefrom. As the liquid which has been previously filled into the reaction container, used is an aqueous solution of an alkali metal silicate, which is obtained by adding the above-mentioned aqueous alkali metal hydroxide solution to a part or all of the aqueous active silicic acid solution as obtained in the step (c) and which has been adjusted to have an SiO₂ concentration of from 1 to 6 % by weight and a molar ratio of SiO₂/M₂O of being from 1 to 4.5, M having the same meaning as defined above, or an aqueous solution of an alkali metal silicate, which is obtained by concentrating or diluting the previous alkali metal silicate solution to have an SiO₂ concentration of from 0.1 to 8 % by weight, or the above-mentioned aqueous alkali metal hydroxide solution having a concentration of from 0.1 to 5 % by weight. As the feeding solution, used is a remaining part of the aqueous active silicic acid solution as obtained in the step (c) or an aqueous solution of an active silicic acid to be obtained separately in the same way as the previous steps (a) to (c). In the step (d), the feeding liquid is added to the liquid which has been previously filled into the reaction container, whereupon the feeding is continued until the resulting mixture liquid in the reaction container has a molar ratio of SiO₂/M₂O of from 30 to 300, M having the same meaning as defined above.

The step (e) successively follows the step (d), and it is preferably started immediately after completion of the previous step (d). In the step (e), the liquid as obtained in the step (d) is heated with stirring at a temperature of from 60 to 150°C for a period of approximately from 0.1 to 10 hours, to thereby yield a stable aqueous sol of a colloidal silica.

The micro porous membrane to be used in the step (f) may be any commercial product which is generally used for concentration of a dispersion of colloidal particles, and an ultrafilter membrane having a pore diameter of 10 nm or less, especially desirably from 1 to 7 nm, is preferred. The concentration in the step (f) is desired to be effected at a temperature as high as possible without interfering with the stability of the ultrafilter membrane used. In general, the concentration is preferably effected with maintaining the temperature of the aqueous silica sol at from 20 to 80°C .

The hydrogen-type strong-acid cation-exchange resin to be employed in the step (g) may be one which is same as that used in the previous step (a). The hydroxyl-type strong-basic anion-exchange resin to be used therein may also be an ordinary one which is same as that employed in the step (c). The contact of the stable aqueous sol with the ion exchange resins in the step (g) may be effected in the same manner as that in the step (c). More preferably, the solution which resulted from the contact with the hydroxyl-type strong-basic anion-exchange resin is further brought into contact with the above-mentioned hydrogen-type strong-acid cation-exchange resin.

The ammonia to be employed in the step (h) may be a commercial product for industrial use but it is preferably a high-purity one. Desirably, it is employed in the step (h) in the form of an aqueous ammonia having an ammonia concentration of approximately from 5 to 28 % by weight.

In the step (h), the above-mentioned ammonia is added to the aqueous sol as obtained in the step (g), preferably immediately after the formation of the sol. The addition may be effected at a temperature of from 0°C to 100°C, but is preferably effected at room temperature. The amount of the ammonia to be added is such that the resulting silica sol may have a pH value of from 8 to 10.5. As the case may be, an acid or ammonium salt which is free from any metal components may be added to the sol, if desired, in an amount of 1000 ppm or less.

The size of the colloidal particles in the silica sol is calculated out from the specific surface area (m²/g) which is measured by means of a nitrogen gas-adsorbing method of a so-called BET method, as a mean particle size of the particles by a known method. The size of the colloidal particles can be observed with an electronic microscope. The silica sol to be obtained by the step (h), which has a mean particle size of 10 millimicrons, has a narrow particle size distribution of from the minimum particle size of approximately 7 millimicrons to the maximum particle size of approximately 13 millimicrons; and that, which has a mean particle size of 30 millimicrons, also has a narrow particle size distribution of from the minimum particle size of approximately 24 millimicrons to the maximum particle size of approximately 36 millimicrons.

Next, the effect of the present invention will be explained in detail hereunder.

In accordance with the method of the present invention, where the alkali metal silicate-containing aqueous solution is brought into contact with the hydrogen-type strong-acid cation-exchange resin, an aqueous solution of an alkali metal ion-free active silicic acid is formed. The active silicic acid in the aqueous solution is in the form of silicic acid or oligomers thereof, which have a particle size of 3 nm or less, and the aqueous solution is so unstable that it would be gelled within about 100 hours even in the presence of polyvalent metals such as aluminum. Such instability is more noticeable when the SiO₂ concentration in the solution is higher or the temperature of the solution is higher. Accordingly, when a large amount of the silica sol is desired to be produced in an industrial large-scaled plant, it is recommended that the concentration of the active silicic acid in the aqueous solution to be formed in the step (a) does not exceed about 6 % by weight but it is controlled to be lower than 6 % by weight and that the aqueous solution having such a lowered SiO₂ concentration is formed at room temperature. In particular, when the alkali metals or polyvalent metals contained in the raw material are taken in the inside of the silicic acid polymer particles, such metals would hardly be removed from the particles. Therefore, the aqueous solution has desirably a lower concentration so that polymerization of the silicic acid would hardly proceed in the solution. Additionally, for the purpose of avoiding gradual polymerization of the silicic acid which is inevitable even at room temperature, all the aqueous solution of the active silicic acid as formed should be used in the next step as early as possible after the formation thereof. If the SiO₂ concentration in the active silicic acid-containing aqueous solution is lower than approximately 2 % by weight, especially lower than about 1 % by weight, such is inefficient since the amount of the water to be removed in the step of concentration of the silica sol to be formed later would be too much. In the step (a), the SiO₂ concentration of the alkali metal silicate-containing aqueous solution is controlled to be from 1 to 6 % by weight, preferably from 2 to 6 % by weight, before it is brought into contact with the cation-exchange resin, in order that the SiO₂ concentration of the aqueous solution of the active silicic acid to be formed in the step (a) may be from 1 to 6 % by weight, preferably from 2 to 6 % by weight, and that the thus formed active silicic acid-containing aqueous solution may directly be applied to the next step (b) immediately after formation thereof.

In the step (a), the introduction of the aqueous solution into the hydrogen-type strong-acid cation-exchange resin-filled column is effected at a solution-passing speed of approximately from 1 to 10 per hour as the space velocity in order to remove a larger amount of the metal ions from the solution. Additionally, the solution temperature is desirably from 0 to 60°C so that polymerization, increase in viscosity or gellation of the active silicic acid solution would hardly occur during the passing through the column. In the steps (a) to (c), any particular measures are not taken for stabilizing the active silicic acid-containing aqueous solution. Therefore, it is important to keep the above-mentioned SiO₂ concentration and the temperature in these steps.

The strong acid to be added in the step (b) has the function of converting the impurity metal components such as alkali metals or polyvalent metals which are bonded to the active silicic acid or to the inside of the polymer thereof and which are not in the form of dissociated ions into dissociated ions in the solution. The lower the degree of polymerization, of the active silicic is the more easily may be extracted the polyvalent metals from the active silicic acid. Therefore it is also desirable that the addition of the strong acid to the active silicic acid-containing aqueous solution as obtained in the step (a) is finished as early as possible.

However, if the amount of the strong acid to be added is so enlarged that the pH value of the resulting active silicic acid-containing aqueous solution becomes less than 0, removal of the anions in the next step (c) would be difficult though the effect of removing the metal components in the present step (b) would be enhanced. Additionally, when the strong acid is added in such an amount that the pH value of the resulting solution becomes more than 2, the effect of removing the metal components would be poor. Among strong acids, nitric acid has an especially high effect for removing metal components such as aluminum components or iron components. The effect of the strong acid of removing the polyvalent metal components is additionally depend upon the temperature of the solution and the treating time. For instance, when the temperature is from 0 to 40°C, the treating time is preferably from 10 to 120 hours, when the former is from 40 to 60°C, the latter is preferably from 2 to 10 hours or so, and when the former is from 60 to 100°C, the latter is preferably from 0.1 to 2 hours. If the solution is treated with the strong acid for a longer period of time than the said ranges, the solution would often increase in viscosity or gel, as the case may be. Therefore, such is to be avoided.

In the step (c), the metal ions tranferred into the solution and the anions from the acid as added in the step (b) are removed by the hydrogen-type strong-acid cation-exchange resin and the hydroxyl-type strong-basic anion-exchange resin. The solution obtained from the first hydrogen-type strong-acid cation-exchange resin treatment contains the anions from the acid as added in the step (b) so that the dissolved metal ions would easily remain in the solution. As the case may be, the amount of the remaining metal ions in the solution after the hydroxyl-type strong-basic anion-exchange resin treatment would be such that the solution is to have a pH value of from 5 to 7. In such case, however, the solution would be gelled within about one hour. By the second-stage treatment with the hydrogen-type strong-acid cation-exchange resin which is effected after removal of the anions from the solution by the treatment with the hydroxyl-type strong-basic anion-exchange resin, such undesired dissolved metal ions may further be removed favorably.

Since the active silicic acid-containing aqueous solution as obtained by the step (c) is so unstable that it would be gelled within 6 hours, it is applied to the next step (d) as soon as possible, preferably immediately after the formation of the solution. The preferred sodium or potassium hydroxide to be added in the step (d) gives, in growing the colloidal silica particles to a mean particle size of from 10 to 30 nm in the step (d), a higher growing speed by about two times or more than that of any other bases, such as ammonia or amine, in the same molar ratio as in the said sodium or potassium hydroxide.

In the step (d), the feeding liquid is added under heat to the liquid which had been filled previously into the reaction container, whereupon nearly spherical colloidal silica particles are formed, almost all of which particles have a narrow particle size distribution falling within the range of from 10 to 30 nm. However, if the reaction temperature in the step (d) is lower than 60°C, the growing speed of silica particles is slow. Therefore, the temperature is to be not lower than 60°C and is preferably as high as possible. However, if it is higher than 150°C, the particle size of the particles would be larger than 30 nm and, in addition, the vapor pressure from the liquid would be more than 5.85 atms, which is disadvantageous for industrial production. The production efficiency is higher when the feeding time is shorter. However, if the feeding time is shorter than one hour, sufficient growth of the colloidal silica particles could not be attained and additionally the size of almost all of the colloidal silica particles formed could not be uniform so that the particle size distribution of the particles would be too broad. A longer feeding time than 20 hours is not efficient for industrial production. Since, in general, the liquid to be formed in the step (d) still contains small amounts of a non-reacted active silicic acid and non-grown silica particles, it is desired that the step (e) is carried out in such a manner that the reaction liquid is not concentrated because of evaporation of water from the liquid.

Where the molar ratio of SiO₂/M₂O in the mixture liquid in the step (d) is less than 30 or more than 300, the stability of the sol obtained would be poor and the colloidal silica particles could hardly be grown up to a mean particle size of from 10 to 30 nm. The molar ratio is especially preferably from 50 to 200.

By heating in the step (e), small amounts of the non-reacted active silicic acid and non-grown silica particles in the liquid as formed in the step (d) disappear so that a stable aqueous sol of colloidal silica particles having a mean particle size of from 10 to 30 millimicrons is formed. However, heating up to a higher temperature than 150°C is disadvantageous as an industrial production process. On the contrary, if the heating is effected at a lower temperature than 60°C, too long time would be necessary for the heating process. The heating is preferably effected at a temperature of approximately from 60 to 150°C for a period of 0.1 hour or more. However, too longer heating period of more than 10 hours is not efficient. Therefore, the heating time is preferably not longer than 10 hours.

In the step (f), concentration of the aqueous sol as obtained in the step (e), which has an SiO₂ concentration of from 1 to 6 % by weight, is effected. The sol as stabilized by the step (e) may stably be concentrated to an SiO₂ concentration of about 50 % by weight. By the concentration, a part of cations contained in the sol is removed therefrom along with the water passing through the micro porous membrane. Since the amount of the alkali (satisfying the molar ratio of SiO₂/M₂O of from 30 to 300) as adjusted in the step (d) is sufficiently larger than the amount of removed cations, the sol is still stabilized by the remaining alkali content.

Since the sol as formed in the step (f) contains the remaining alkali metal ions as added in the step (d) and also contains minute amounts of anions, the cations and anions are removed from the sol by the treatment of the sol with the hydrogen-type strong-acid cation-exchange resin and the hydroxyl-type strong-basic anion-exchange resin in the step (g). In particular, in order to remove the alkali metal ions from the sol, the second-stage hydrogen-type strong-acid cation-exchange resin treatment is effected. The cation free sol as obtained in the step (g) does not show the instability like the active silicic acid-containing aqueous solution but it does not still have a sufficient stability. Therefore, it is recommended that the treatment of the sol with the ion-exchange resins is not effected at a too high temperature. The sol is stabilized in the next step (h) as soon as possible after the completion of the step (g), preferably immediately after the completion thereof. For the stabilization, ammonia is added to the sol whereby the resulting sol reaches a pH value of from 8 to 10.5. Such ammonia may easily be available as an inexpensive aqueous ammonia of high purity. Additionally, the ammonia in the sol may easily be evaporated from the silica sol afterwards. The silica sol prepared by the method of the present invention can be utilized favorably in various uses.

The following examples are intended to illustrate the present invention in more detail but not to limit it in any way.

### EXAMPLE 1:

### Step (a):

A sodium water glass of JIS No. 3 was prepared as a water-soluble alkali metal silicate of a raw material. The essential components of the water glass except water were SiO₂ of 28.8 % by weight, Na₂O of 9.47 % by weight, Al₂O₃ of 280 ppm, Fe₂O₃ of 45 ppm, CaO of 46 ppm and MgO of 25 ppm.

876 g of the said water glass were dissolved in 6124 g of pure water to prepare 7000 g of an aqueous sodium silicate solution having an SiO₂ concentration of 3.6 % by weight.

Next, the thus prepared aqueous sodium silicate solution of 25°C was passed through a column filled with a hydrogen-type strong-acid cation-exchange resin Amberlite IR-120B, at a space velocity of 3 per hour, and 5950 g of the resulting active silicic acid-containing aqueous solution of 25°C, which had an SiO₂ concentration of 3.54 % by weight, a pH value of 2.78 and an electroconductivity of 667.5 µS/cm, were recovered in a container.

### Step (b):

Nitric acid of a commercial product of a special grade chemical (specific gravity: 1.38, HNO₃ content: 61.3 wt.%) was prepared as the strong acid to be employed in the step.

20.2 g of the nitric acid were added to 5950 g of the fresh active silicic acid-containing aqueous solution as obtained in the step (a) immediately after the formation of the solution, and the pH value of the resulting solution was adjusted to 1.54 and then allowed to stand as it was for 48 hours at 20°C. Accordingly, the step (b) was finished.

After completion of the step (b), the following steps (c) to (h) were carried out in order to prepare a stable aqueous silica sol of the present invention. As the hydrogen-type strong-acid cation-exchange resin was employed Amberlite IR-120B which had been treated with an aqueous sulfuric acid solution having a hydrogen ion content corresponding to three times of the cation-exchange capacity of the resin. As the hydroxyl-type strong-basic anion-exchange resin was employed Amberlite IRA-410 which had been treated with an aqueous sodium hydroxide solution having a hydroxyl content corresponding to three times of the anion-exchange capacity of the resin.

### Step (c):

5970 g of the fresh active silicic acid-containing aqueous solution as prepared in the above-mentioned step (b) were, immediately after formation thereof, passed through a column of about 25°C as filled with the above-mentioned Amberlite IR-120B at a space velocity of 5 per hour, and the whole amount of the resulting solution was then directly successively passed through a column of about 25°C filled with the above-mentioned Amberlite IRA-410 at a space velocity of 3 per hour. Subsequently, the whole amount of the resulting solution was then passed through a column of about 25°C as filled with a separately prepared above-mentioned Amberlite IR-120B at a space velocity of 5 per hour, and 5030 g of the whole amount of the thus obtained solution were recovered in a container. The solution thus recovered in the container had a SiO₂ concentration of 3.52 % by weight, a pH value of 4.38 and an electroconductivity of 27.20 µS/cm. It contained 0.25 ppm of Al₂O₃, 0.19 ppm of Fe₂O₃, 0.08 ppm of CaO and 0.02 ppm of MgO.

### Step (d):

A glass reaction container having an effective capacity of 5 liters was employed. which was equipped with a stirrer and a heating means.

43 g of an aqueous 10 wt.% potassium hydroxide and 500 g of a pure water were put in the reaction container to form an aqueous potassium hydroxide solution having a K₂O concentration of 0.67 % by weight. The liquid temperature in the container was heated up to 85°C, and thereafter 3920 g of the fresh active silicic acid-containing aqueous solution as obtained in the above-mentioned step (c) were, immediately after formation thereof as a feeding liquid, continuously fed into the reaction container over a period of 6.0 hours, whereupon the liquid temperature in the container was kept at 85°C during the addition. Since the active silicic acid-containing aqueous solution as prepared in the step (c) was unstable, preparation of the active silicic acid-containing aqueous solution of the step (c) was effected three times in accordance with the feeding of the solution in the step (d). The active silicic acid-containing solution thus formed in one batch was used in the step (d) within 2 hours from the preparation.

### Step (e):

Subsequently, the mixture was heated for further 2 hours under the boiling and reflux condition of water at normal pressure, to thereby obtain 4463 g of a sol. The sol thus obtained had an SiO₂ concentration of 3.09 % by weight, a pH value of 10.26, an electroconductivity of 695 µS/cm, a K₂O content of 0.081 % by weight, and a molar ratio of SiO₂/K₂O of being 60. The particle size of the colloidal silica particles in the sol was evaluated from the specific surface area (BET method) to be 13.0 nm as the mean particle size. The particles as observed in the electromicroscopic photograph of the sol were almost spherical.

### Step (f):

Next, the silica sol was concentrated at room temperature, using a commercial ultrafiltration device equipped with a polysulfone ultrafilter membrane having a pore size of about 5 nm, to have a SiO₂ concentration of about 35 % by weight. During the concentration, the liquid was stable and the concentration proceeded extremely smoothly. As a result, 396 g of a sol were obtained.

The silica sol had a specific gravity of 1.241, a pH value of 9.95, a viscosity (at 20°C) of 24.5 cps, an electroconductivity of 3620 µS/cm, a SiO₂ concentration of 34.8 % by weight, a K₂O concentration (by titration) of 0.89 % by weight and a molar ratio of SiO₂/K₂O of 92 and contained 2.5 ppm of Al₂O₃, 2.0 ppm of Fe₂O₃, 0.8 ppm of CaO and 0.2 ppm of MgO. This was stable and no change in property was observed for one month or more at 60°C.

### Step (g):

The silica sol prepared in the step (f) was passed through a column of about 25°C filled with a hydrogen-type strong-acid cation-exchange resin Amberlite IR-120B, at a space velocity of 3 per hour. Then the silica sol as resulted from the passing was passed through a column of about 25°C filled with a hydroxyl-type strong-basic anion-exchange resin Amberlite IRA-410 at a space velocity of 3 per hour, and last the silica sol as resulted from the passing was thereafter passed through a column of about 25°C filled with a hydrogen-type strong-acid cation-exchange resin Amberlite IR-120B at a space velocity of 3 per hour, to finally obtain 425 g of an acidic aqueous silica sol.

The sol had a specific gravity of 1.214, a pH value of 4.68, a viscosity (at 20°C) of 3.2 cps, an electroconductivity of 74 µS/cm, an SiO₂ concentration of 32.5 % by weight, a K₂O content of 440 ppm and a molar ratio of SiO₂/ K₂O of 1158.

### Step (h):

2.3 g of a 28 % aqueous ammonia of a commercial product of a special grade chemical and 16.7 g of a pure water were added to 300 g of the fresh silica sol of 25°C as obtained in the previous step (g), immediately after formation of the sol, with stirring, to obtain 319 g of a silica sol.

The sol thus obtained had a specific gravity of 1.205, a pH value of 9.40, a viscosity (at 20°C) of 24.8 cps and an electroconductivity of 2760 µS/cm. This was stable and no change in properties was observed for one month or more at 60°C. This had an SiO₂ concentration of 30.6 % by weight, a molar ratio of SiO₂/(NH₄)₂O of 87 and contained 2.2 ppm of Al₂O₃, 1.7 ppm of Fe₂O₃, 410 ppm of K₂O, 1.0 ppm of Cl and 1.0 ppm of SO₄.

### EXAMPLE 2:

In Example 2, a silica sol was prepared by the process comprising the following steps (d) to (h), from the active silicic acid-containing aqueous solution as prepared in accordance with the steps (a) to (c) of Example 1. The aqueous ammonia, ion-exchange resins and reactors used were the same as those used in Example 1.

### Step (d):

184 g of pure water and 16 g of an aqueous 10 wt.% high-purity sodium hydroxide solution were added to 110 g of the fresh active silicic acid-containing solution as obtained in the step (c) of Example 1, immediately after formation of the solution, to prepare 310 g of an aqueous solution of sodium silicate.

The aqueous solution had an SiO₂ concentration of 1.25 % by weight, an Na₂O concentration of 0.4 % by weight and a molar ratio of SiO₂/Na₂O of 3.21.

Next, the whole amount of the sodium silicate-containing aqueous solution was put in a reactor and then heated with stirring up to a boiling and refluxing temperature of water at normal pressure. Then, 4390 g of the fresh active silicic acid-containing aqueous solution as obtained in the previous step (C), immediately after formation thereof, were continuously fed into the reactor under the boiling and refluxing condition of water at normal pressure, over a period of 8 hours. In accordance with the feeding procedure in the present step (d), preparation of the active silicic acid-containing aqueous solution was effected four times in the step (c), and the active silicic acid-containing aqueous solution as obtained in each time was used within 2 hours after preparation of the solution.

### Step (e):

After completion of the step (d), the liquid as obtained in the step (d) was allowed to stand under the boiling and refluxing condition of water at normal pressure for 2 hours, whereby the step (e) was finished. The aqueous silica sol thus obtained had an SiO₂ concentration of 3.36 % by weight, an Na₂O content of 0.026 % by weight, a molar ratio of SiO₂/Na₂O of 132, a pH value of 10.02, an electroconductivity of 572 µS/cm, and a mean particle size (by BET method) of 21.0 nm. This was stable and no change in property was observed for one month or more at 60°C. By electromicroscopic observation, the particles of the colloidal silica were found to be almost spherical.

### Step (f):

Next, the sol as obtained in the previous step (e) was concentrated with an ultrafiltration device in the same manner as in the step (f) of Example 1, to obtain 353 g of a stable silica sol having an SiO₂ concentration of about 45 % by weight.

The sol had a specific gravity of 1.341, a pH value of 9.67, a viscosity (at 20°C) of 28 cps, and an electroconductivity of 1950 µS/cm. It had an SiO₂ concentration of 44.7 % by weight, an Na₂O content of 0.24 % by weight (by titration) and a molar ratio of SiO₂/Na₂O of 192 and contained 3.2 ppm of Al₂O₃, 2.4 ppm of Fe₂O₃, 1.0 ppm of CaO and 0.3 ppm of MgO. This was stable and no change in properties was observed for one month or more at 60°C.

### Step (g):

The silica sol as obtained in the previous step (f) was passed through a column of about 25°C filled with a hydrogen-type strong-acid cation-exchange resin, at a space velocity of 3 per hour; then the silica sol as resulted from the passing was passed through a column of about 25°C filled with a hydroxyl-type strong-basic anion-exchange resin, at a space velocity of 3 per hour; and last the silica sol as resulted from the passing was successively passed through a column of about 25°C filled with a hydrogen-type strong-acid cation-exchange resin, at a space velocity of 3 per hour, to finally obtain 375 g of an acidic aqueous silica sol.

The sol thus obtained had a specific gravity of 1.312, a pH value of 4.72, a viscosity (at 20°C) of 5.4 cps, an electroconductivity of 108 µS/cm, an SiO₂ concentration of 42.1 % by weight, an Na₂O content of 800 ppm, and a molar ratio of SiO₂/Na₂O of 561.

### Step (h):

3.0 g of an aqueous 28 wt.% ammonia, 8.14 g of pure water and 0.86 g of an aqueous 10 wt.% nitric acid solution were added to 330 g of the fresh aqueous silica sol as obtained in the previous step (g), immediately after formation thereof, with stirring at 25°C as the liquid temperature, to obtain 342 g of a silica sol.

The sol thus obtained had a specific gravity of 1.296, a pH value of 9.5, a viscosity (at 20°C) of 24.7 cps, and an electroconductivity of 3740 µS/cm. This was stable and no change in properties was observed for one month or more at 60°C. This had an SiO₂ concentration of 40.6 % by weight and a molar ratio of SiO₂/(NH₄)₂O of 92 and contained 2.9 ppm of Al₂O₃, 2.2 ppm of Fe₂O₃, 770 ppm of Na₂O, 1.0 ppm of Cl, 1.0 ppm of SO₄ and 250 ppm of NO₃.

### COMPARATIVE EXAMPLE 1:

In the comparative example, the same process of steps (a) to (c) as that in Example 1 was repeated, which was then followed by the following steps (d) to (f).

### Step (d):

500 g of a pure water and 43 g of an aqueous 10 wt.% potassium hydroxide solution were put in a reactor to prepare 543 g of an aqueous potassium hydroxide solution having a K₂O content of 0.67 % by weight. Next, the solution was heated with stirring up to 55°C, and with keeping the elevated temperature of the solution, 3920 g of the active silicic acid-containing aqueous solution as obtained in the step (c) was continuously added thereto over a period of 6 hours. Preparation of the active silicic acid-containing solution was effected in the same manner as in Example 1, in accordance with the feeding procedure in the step (d).

### Step (e):

After completion of the step (d), the stirring was still continued for further 2 hours with maintaining the liquid temperature in the container to be 55°C, whereby the step (e) was finished.

The sol thus obtained had a pH value of 9.87, an electroconductivity of 663 µS/cm, an SiO₂ concentration of 3.09 % by weight, a K₂O content of 0.081 % by weight and a molar ratio of SiO₂/K₂O of 60. By electromicroscopic observation, the colloidal silica particles were found to be almost spherical and to have a uniform and narrow particle size distribution. However, the mean particle size of the particles as calculated out from the specific surface area (measured by BET method) was 6.8 nm.

### Step (f):

The sol as obtained in the previous step (e) was started to be concentrated in the same manner as in the step (f) of Example 1. However, when the sol came to have an SiO₂ concentration of about 27 % by weight, a silica gel was formed on the ultrafilter membrane so that the filtration speed noticeably lowered and the concentration could not be continued further more. The 27 wt.% sol was taken out from the ultrafiltration device and recovered into a container. After allowing to stand at room temperature for 24 hours all the sol was completely gelled.

As is obvious from the above-mentioned explanation, in accordance with the method of the present invention, a stable aqueous silica sol, which has an SiO₂ concentration of from 30 to 50 % by weight and in which the colloidal silica particles have a mean particle size of from 10 to 30 nm, may efficiently be prepared from of a water glass of an ordinary industrial product as starting material which contains polyvalent metals as impurities. The aqueous silica sol thus to be prepared by the method of the present invention is a high-purity industrial product which has an alkali metal oxide content of not higher than 2000 ppm to silica and a polyvalent metal oxide content of less than 300 ppm to silica.

The aqueous silica sol to be prepared by the method of the present invention has a small particle size and a high binding strength. Additionally, the size of the colloidal silica particles in the sol is relatively uniform so that a hardened product from the sol may have a lot of uniform micro pores and may therefore have extremely excellent properties as a carrier. The sol may be utilized in various uses where conventional silica sols have heretofore been employed and, in particular, it is especially preferably utilized as an abrasive for polishing surfaces of semiconductors and a binder for catalysts and in other various fields which require a high-purity silica sol.

## Claims

1. A method of preparing a stable aqueous silica sol which has an SiO₂ concentration of from 30 to 50 % by weight, which is substantially free from any other polyvalent metal oxides than silica and in which the colloidal silica has a mean particle size of from 10 to 30 millimicrons, the method comprising the following steps (a), (b), (c), (d), (e), (f), (g) and (h):
(a) a step where an aqueous solution of a water-soluble alkali metal silicate as dissolved therein in a concentration of from 1 to 6 % by weight as the SiO₂ content to be derived from the silicate, the said silicate containing other polyvalent metal oxides than silica in a proportion to silica of from 300 to 10000 ppm, is passed through a column as filled with a hydrogen-type strong-acid cation-exchange resin in such an amount as being sufficient for ion-exchanging all the metal ions in the aqueous solution, at a temperature of from 0 to 60° C as the liquid temperature in the inside of the column and at a space velocity of from 1 to 10 per hour, and the aqueous solution of the active silicic acid which resulted from the passing and which has an SiO₂ concentration of from 1 to 6 % by weight and a pH value of from 2 to 4 is recovered;
(b) a step where a strong acid is added to the aqueous solution of the active silicic acid as recovered in the step (a) so that the said aqueous solution is adjusted to have a pH value of from 0 to 2.0 and then the resulting aqueous solution is kept at a temperature between 0° C and 100° C for a period of from 0.1 to 120 hours;
(c) a step where the aqueous solution as obtained in the step (b) is passed through a column as filled with a hydrogen-type strong-acid cation-exchange resin in such an amount as being sufficient for ion-exchanging all the metal ions in the aqueous solution, at a temperature of from 0 to 60° C as the liquid temperature in the inside of the column and at a space velocity of from 2 to 20 per hour, the aqueous solution which resulted from the passing is then passed through a column as filled with a hydroxyl-type strong-basic anion-exchange resin in such an amount as being sufficient for ion-exchanging all the anions in the solution, at a temperature of from 0 to 60° C as the liquid temperature in the inside of the column and at a space velocity of from 1 to 10 per hour, and thereafter the aqueous solution of the active silicic acid which resulted from the passing and which is substantially free from any other soluble substances than the active silicic acid and has an SiO₂ concentration of from 1 to 6 % by weight and a pH value of from 2 to 5 is recovered;
(d) a step where the aqueous solution of the active silicic acid recovered in the step (c) is fed over a period of time of 1 to 20 hours into an aqueous solution of an alkali metal silicate having an SiO₂ concentration of from 0.1 to 8 % by weight and a molar ratio of 1 to 4.5 as SiO₂/M₂O , wherein M represents an alkali metal atom, or into an aqueous solution of an alkali metal hydroxide having a concentration of from 0.1 to 5 % by weight of said hydroxide until a molar ratio of 30 to 300 as SiO₂/M₂O of the resulted liquid by the feeding is obtained while said resulted liquid by the feeding is maintained at a temperature of from 60 to 150° C under stirring throughout the feeding, said aqueous solution of an alkali metal silicate being formed by mixing an aqueous solution of an alkali metal hydroxide with an aqueous solution of the active silicic acid recovered in the same step as step (c) or by diluting or concentrating the resulted mixture;
(e) a step where the resulted liquid in the step (d) is heated under stirring at a temperature of from 60 to 150° C for a period of time of from 0.1 to 10 hours, thereby to form a stable aqueous sol of colloidal silica having a mean particle size of from 10 to 30 nm;
(f) a step where the water in the formed sol in the step (e) is removed through a micro porous membrane from said sol until a stable aqueous sol of colloidal silica having an SiO₂ concentration of 30 to 50 % by weight is formed;
(g) a step where the stable aqueous silica sol as obtained in the step (f) is passed through a column as filled with a hydrogen-type strong-acid cation-exchange resin in such an amount as being sufficient for ion-exchanging all the metal ions as contained in the sol, at a temperature of from 0 to 60° C and at a space velocity of from 2 to 20 per hour, then the solution which resulted from the passing is passed through a column as filled with a hydroxyl-type strong-basic anion-exchange resin in such an amount as being sufficient for ion-exchanging all the anions in the solution, at a temperature of from 0 to 60° C and at a space velocity of from 1 to 10 per hour, and then the acidic aqueous silica sol which resulted from the passing and which is substantially free from any other polyvalent metal oxides than silica is recovered; and
(h) a step where ammonia is added to the acidic aqueous sol as recovered in the step (g), with keeping the temperature of the sol at 0 to 100° C to make the pH value of the sol to be from 8 to 10.5, thereby to form a stable aqueous silica sol which has an SiO₂ concentration of from 30 to 50 % by weight, which is substantially free from any other polyvalent metal oxides than silica and in which the colloidal silica has a mean a particle size of from 10 to 30 nm.

2. The method of preparing an aqueous silica sol as claimed in claim 1, in which the water-soluble alkali metal silicate in the step (a) is a sodium water glass having a molar ratio of SiO₂/Na₂O of from 2 to 4.

3. The method of preparing an aqueous silica sol as claimed in claim 1 or 2, in which the strong acid in the step (b) is nitric acid.

4. The method of preparing an aqueous silica sol as claimed in any one of claims 1 to 3, in which the alkali metal hydroxide in the step (d) is sodium or potassium hydroxide.

5. The method of preparing an aqueous silica sol as claimed in any one of claims 1 to 4, in which the alkali metal hydroxide solution mixed with the aqueous solution of the active silicic acid in the step (d) is an aqueos sodium or potassium hydroxide solution having a concentration of the hydroxide of from 2 to 20 % by weight.

6. The method of preparing an aqueous silica sol as claimed in any one of claims 1 to 5, in which the micro porous membrane in the step (f) is a ultrafilter membrane having a pore size of from 1 to 7 nm.

7. The method of preparing an aqueous silica sol as claimed in any one of claims 1 to 6, in which the temperature of the sol during the removal of water from the sol in the step (f) is maintained at 20 to 80 ° C.

8. The method of preparing an aqueous silica sol as claimed in any one of claims 1 to 7, in which the ammonia in the step (h) is an aqueous ammonia having ammonia concentration of from 5 to 30 % by weight.

## Patentansprüche

1. Verfahren zur Herstellung eines stabilen wässrigen Silikasols, das eine SiO₂-Konzentration von 30 bis 50 Gew.% hat, das im wesentlichen frei ist von anderen mehrwertigen Metalloxiden ausser Silika, und bei dem das kolloidale Silika eine mittlere Partikelgrösse von 10 bis 30 Millimicrons (nm) hat, umfassend die folgenden Schritte (a), (b), (c), (d), (e), (f), (g) und (h):
(a) einen Schritt, bei dem eine wässrige Lösung eines wasserlöslichen AlkalimetallSilikats, das darin in einer Konzentration von 1 bis 6 Gew.% als SiO₂-Gehalt, abgeleitet vom Silikat, gelöst ist, wobei das Silikat andere mehrwertige Metalloxide ausser Silika in einem Verhältnis zu Silika von 300 bis 10.000 ppm enthält, durch eine Säule, die mit einem stark sauren Kationenaustauscherharz vom Wasserstoff-Typ in einer Menge gefüllt ist, die zum Ionenaustausch aller Metallionen in der wässrigen Lösung ausreicht, bei einer Temperatur von 0 bis 60°C als die Temperatur der Flüssigkeit im Inneren der Säule und mit einer Raumgeschwindigkeit von 1 bis 10 pro Stunde durchgeleitet wird, und die wässrige aktive Kieselsäurelösung, die aus dem Durchleiten resultiert und eine SiO₂-Konzentration von 1 bis 6 Gew.% und einen pH-Wert von 2 bis 4 hat, gewonnen wird;
(b) einen Schritt, bei dem eine starke Säure zu der wässrigen aktiven Kieselsäurelösung, die in Schritt (a) gewonnen wird, zugegeben wird, so dass diese wässrige Lösung auf einen pH-Wert von 0 bis 2,0 eingestellt wird und dann die resultierende wässrige Lösung bei einer Temperatur zwischen 0 und 100°C während eines Zeitraums von 0,1 bis 120 Stunden gehalten wird;
(c) einen Schritt, bei dem die in Schritt (b) erhaltene wässrige Lösung durch eine mit einem stark sauren Kationenaustauscherharz vom Wasserstoff-Typ in einer solchen Menge gefüllten Säule, dass sie zum Ionenaustausch aller Metallionen in der wässrigen Lösung ausreicht, bei einer Temperatur von 0 bis 60°C als Temperatur der Flüssigkeit im Inneren der Säule und bei einer Raumgeschwindigkeit von 2 bis 20 pro Stunde durchgeleitet wird, die vom Durchleiten resultierende wässrige Lösung dann durch eine Säule, die mit einem stark basischen Anionenaustauscherharz vom Hydroxyl-Typ in einer solchen Menge gefüllt ist, dass sie zum Ionenaustausch aller Anionen in der Lösung ausreicht, bei einer Temperatur von 0 bis 60°C als Temperatur der Flüssigkeit im Inneren der Säule und mit einer Raumgeschwindigkeit von 1 bis 10 pro Stunde durchgeleitet wird, und danach die wässrige aktive Kieselsäurelösung, die vom Durchleiten herrührt und im wesentlichen frei ist von weiteren löslichen Substanzen ausser aktiver Kieselsäure und eine SiO₂-Konzentration von 1 bis 6 Gew.% und einen pH-Wert von 2 bis 5 hat, gewonnen wird;
(d) einen Schritt, bei dem die wässrige aktive kieselsäurehaltige Lösung, die in Schritt (c) gewonnen wird, im Verlauf eines Zeitraums von 1 bis 20 Stunden in eine wässrige Lösung eines AlkalimetallSilikats mit einer SiO₂-Konzentration von 0,1 bis 8 Gew.% und einem Molverhältnis von 1 bis 4,5 als SiO₂/M₂O, wobei M ein Alkalimetallatom darstellt, oder in eine wässrige Lösung eines Alkalimetallhydroxids mit einer Konzentration von 0,1 bis 5 Gew.% dieses Hydroxids zugegeben wird, bis ein Molverhältnis von 30 bis 300 als SiO₂/M₂O der resultierenden Flüssigkeit durch die Zugabe erhalten wird, die durch die Zugabe entstehende Flüssigkeit bei einer Temperatur von 60 bis 150°C unter Rühren während der Zugabe gehalten wird, wobei die genannte wässrige AlkalimetallSilikatlösung durch Mischen einer wässrigen Alkalimetallhydroxidlösung mit einer wässrigen aktiven Kieselsäurelösung, die im selben Schritt wie Schritt (c) gewonnenen wird, oder durch Verdünnung oder Konzentrierung der resultierenden Mischung gebildet wird;
(e) einen Schritt, in dem die aus Schritt (d) resultierende Flüssigkeit unter Rühren bei einer Temperatur von 60 bis 150°C während eines Zeitraums von 0,1 bis 10 Stunden erhitzt wird und so ein stabiles wässriges kolloidales Silikasol mit einer mittleren Partikelgrösse von 10 bis 30 nm gebildet wird;
(f) einen Schritt, bei dem das Wasser im gebildeten Sol in Schritt (e) durch eine mikroporöse Membran von diesem Sol entfernt wird, bis ein stabiles wässriges Sol aus kolloidalem Silika mit einer SiO₂-Konzentration von 30 bis 50 Gew.% gebildet wird;
(g) einen Schritt, bei dem das in Schritt (f) erhaltene stabile, wässrige Silikasol durch eine mit einem stark sauren Kationenaustauscherharz vom Wasserstoff-Typ in einer solchen Menge gefüllten Säule, dass sie zum Ionenaustausch aller im Sol enthaltenen Metallionen ausreicht, bei einer Temperatur von 0 bis 60°C und mit einer Raumgeschwindigkeit von 2 bis 20 pro Stunde durchgeleitet wird, dann die aus der Durchleitung resultierende Lösung durch eine Säule, die mit einem stark basischen Anionenaustauscherharz vom Hydroxyl-Typ in einer solchen Menge gefüllt ist, dass sie zum Ionenaustausch aller Anionen in der Lösung ausreicht, bei einer Temperatur von 0 bis 60°C und einer Raumgeschwindigkeit von 1 bis 10 pro Stunde durchgeleitet wird, und dann das vom Durchleiten resultierende saure wässrige Silikasol, das im wesentlichen frei von anderen mehrwertigen Metalloxiden ausser Silika ist, gewonnen wird; und
(h) einen Schritt, bei dem Ammoniak zu dem in Schritt (g) gewonnenen sauren wässrigen Sol zugegeben wird, wobei die Temperatur des Sols auf 0 bis 100°C gehalten wird, so dass der pH-Wert des Sols von 8 bis 10,5 beträgt, wobei ein stabiles wässriges Silikasol gebildet wird, das eine SiO₂-Konzentration von 30 bis 50 Gew.% hat, im wesentlichen frei von anderen mehrwertigen Metalloxiden ausser Silika ist, und bei dem das kolloidale Silika eine mittlere Partikelgrösse von 10 bis 30 nm hat.

2. Verfahren zur Herstellung eines wässrigen Silikasols gemäss Anspruch 1, worin das wasserlösliche AlkalimetallSilikat in Schritt (a) ein Natriumwasserglas mit einem Molverhältnis von SiO₂/Na₂O von 2 bis 4 ist.

3. Verfahren zur Herstellung eines wässrigen Silikasols gemäss Anspruch 1 oder 2, wobei die starke Säure in Schritt (b) Salpetersäure ist.

4. Verfahren zur Herstellung eines wässrigen Silikasols gemäss einem der Ansprüche 1 bis 3, wobei das Alkalimetallhydroxid in Schritt (d) Natrium- oder Kaliumhydroxid ist.

5. Verfahren zur Herstellung eines wässrigen Silikasols gemäss einem der Ansprüche 1 bis 4, wobei die mit der wässrigen aktiven Kieselsäurelösung gemischte Alkalimetallhydroxidlösung in Schritt (d) eine wässrige Natrium- oder Kaliumhydroxidlösung mit einer Konzentration des Hydroxids von 2 bis 20 Gew.% ist.

6. Verfahren zur Herstellung eines wässrigen Silikasols gemäss einem der Ansprüche 1 bis 5, bei dem die mikroporöse Membran in Schritt (f) eine Ultrafiltrationsmembran mit einer Porengrösse von 1 bis 7 nm ist.

7. Verfahren zur Herstellung eines wässrigen Silikasols gemäss einem der Ansprüche 1 bis 6, bei dem die Temperatur des Sols während der Entfernung des Wassers vom Sol in Schritt (f) auf 20 bis 80°C gehalten wird.

8. Verfahren zur Herstellung eines wässrigen Silikasols gemäss einem der Ansprüche 1 bis 7, wobei der Ammoniak in Schritt (h) ein wässriger Ammoniak mit einer Ammoniakkonzentration von 5 bis 30 Gew.% ist.

## Revendications

1. Procédé de préparation d'un sol de silice aqueux, stable, qui possède une concentration en SiO₂ de 30 à 50% en poids, qui est essentiellement exempt de tous oxydes métalliques polyvalents autres que la silice, et dans lequel la silice colloïdale a une taille moyenne de particule de 10 à 30 millimicromètres, le procédé comprenant les étapes suivantes (a), (b), (c), (d), (e), (f), (g) et (h):
(a) une étape dans laquelle une solution aqueuse d'un silicate de métal alcalin soluble dans l'eau, y dissous a une concentration de 1 à 6% en poids en ce qui concerne la teneur en SiO₂ provenant du silicate, ledit silicate contenant des oxydes métalliques polyvalents autres que la silice, dans une proportion de 300 à 10000 ppm par rapport à la silice, traverse une colonne garnie d'une résine échangeuse de cations du type hydrogéné, acide fort, en quantité suffisante pour un échange ionique de tous les ions métalliques de la solution aqueuse, à une température de 0 à 60°C en ce qui concerne la température du liquide à l'intérieur de la colonne, et à une vitesse spatiale de 1 à 10 par heure, et la solution aqueuse de l'acide silicique actif qui résulte du passage et possède une concentration en SiO₂ de 1 à 6% en poids et un pH de 2 à 4, est récupérée;
(b) une étape dans laquelle un acide fort est ajouté à la solution aqueuse de l'acide silicique récupéré à l'étape (a), de telle sorte que la solution aqueuse est ajustée pour avoir un pH de 0 à 2,0, et la solution aqueuse résultante est ensuite maintenue à une température entre 0°C et 100°C pendant une période de 0,1 à 120 heures;
(c) une étape dans laquelle la solution aqueuse obtenue à l'étape (b) traverse une colonne garnie d'une résine échangeuse de cations du type hydrogéné, acide fort, en quantité telle qu'elle est suffisante pour un échange ionique de tous les ions métalliques de la solution aqueuse, à une température de 0 à 60°C en ce qui concerne la température du liquide à l'intérieur de la colonne et à une vitesse spatiale de 2 à 20 par heure, la solution aqueuse résultant du passage traverse ensuite une colonne garnie d'une résine échangeuse d'anions du type hydroxyle, base forte, en quantité suffisante pour un échange ionique de tous les anions de la solution, à une température de 0 à 60°C en ce qui concerne la température du liquide à l'intérieur de la colonne, et à une vitesse spatiale de 1 à 10 par heure, et la solution aqueuse de l'acide silicique actif résultant du passage, et qui est essentiellement exempte de toutes substances solubles autres que l'acide silique actif et possède une concentration en SiO₂ de 1 à 6% en poids et un pH de 2 à 5, est ensuite récupérée;
(d) une étape dans laquelle la solution aqueuse de l'acide silicique actif récupérée à l'étape (c) est amenée sur une période de 1 à 20 heures dans une solution aqueuse d'un silicate de métal alcalin possédant une concentration en SiO₂ de 0,1 à 8% en poids et un rapport molaire de 1 à 4,5 sous la forme SiO₂/M₂O, dans laquelle M représente un atome de métal alcalin, ou dans une solution aqueuse d'un hydroxyde de métal alcalin ayant une concentration de 0,1 à 5% en poids de l'hydroxyde, jusqu'à obtenir par l'alimentation un rapport molaire SiO₂/M₂O de 30 à 300 dans le liquide résultant, le liquide résultant de l'alimentation étant maintenu à une température de 60 à 150°C sous agitation pendant toute l'alimentation, la solution aqueuse du silicate de métal alcalin étant formée en mélangeant une solution aqueuse d'un hydroxyde de métal alcalin avec une solution aqueuse de l'acide silicique actif récupérée dans la même étape que l'étape (c) ou en diluant ou concentrant le mélange résultant;
(e) une étape dans laquelle le liquide résultant de l'étape (d) est chauffé sous agitation à une température de 60 à 150°C pendant un laps de temps de 0,1 à 10 heures, pour former ainsi un sol aqueux stable de silice colloïdale ayant une taille moyenne de particule de 10 à 30 nm;
(f) une étape dans laquelle l'eau dans le sol formé à l'étape (e) est éliminée du sol à travers une membrane microporeuse, jusqu'à ce qu'il se forme un sol aqueux stable de silice colloïdale ayant une concentration en SiO₂ de 30 à 50% en poids;
(g) une étape dans laquelle le sol de silice aqueux stable obtenu à l'étape (f) traverse une colonne garnie d'une résine échangeuse de cations du type hydrogéné, acide fort, en quantité suffisante pour un échange ionique de tous les ions métalliques contenus dans le sol, à une température de 0 à 60°C et à une vitesse spatiale de 2 à 20 par heure, la solution résultant du passage traverse ensuite une colonne garnie d'une résine échangeuse d'anions du type hydroxyle, base forte, en quantité suffisante pour un échange ionique de tous les anions de la solution, à une température de 0 à 60°C et a une vitesse spatiale de 1 à 10 par heure, et le sol de silice aqueux acide résultant du passage et essentiellement exempt de tous oxydes métalliques polyvalents autres que la silice, est ensuite récupéré;
(h) une étape dans laquelle de l'ammoniac est ajouté au sol aqueux acide récupéré à l'étape (g), tout en maintenant la température du sol à 0 à 100°C pour que le pH du sol se situe entre 8 et 10,5, pour ainsi former un sol de silice aqueux stable possédant une concentration en SiO₂ de 30 à 50% en poids, qui est essentiellement exempt de tous oxydes métalliques polyvalents autres que la silice et dans lequel la silice colloïdale a une taille moyenne de particule de 10 à 30 nm.

2. Procédé de préparation d'un sol de silice aqueux selon la revendication 1, dans lequel le silicate de métal alcalin de l'étape (a) est un verre sodique soluble ayant un rapport molaire SiO₂/Na₂O de 2 à 4.

3. Procédé de préparation d'un sol de silice aqueux selon la revendication 1 ou 2, dans lequel l'acide fort de l'étape (b) est l'acide nitrique.

4. Procédé de préparation d'un sol de silice aqueux selon l'une quelconque des revendications 1 à 3, dans lequel l'hydroxyde de métal alcalin de l'étape (d) est l'hydroxyde de sodium ou de potassium.

5. Procédé de préparation d un sol de silice aqueux selon l'une quelconque des revendications 1 à 4, dans lequel la solution aqueuse d'acide silicique actif de l'étape (d) est une solution aqueuse d'hydroxyde de sodium ou de potassium ayant une concentration en hydroxyde de 2 à 20% en poids.

6. Procédé de préparation d'un sol de silice aqueux selon l'une quelconque des revendications 1 à 5, dans lequel la membrane microporeuse de l'étape (f) est une membrane d'ultrafiltration ayant une taille de pores de 1 à 7 nm.

7. Procédé de préparation d'un sol de silice aqueux selon l'une quelconque des revendications 1 à 6, dans lequel la température du sol pendant l'élimination de l'eau du sol à l'étape (f) est maintenue à 20 à 80°C.

8. Procédé de préparation d'un sol de silice aqueux selon l'une quelconque des revendications 1 à 7, dans lequel l'ammoniac à l'étape (h) est une solution aqueuse d'ammoniac ayant une concentration en ammoniac de 5 à 30% en poids.
